Europäisches Patentamt

European Patent Office

Office européen des brevets

(19)

(11) Publication number: **0 037 275**
**B1**

(12) **EUROPEAN PATENT SPECIFICATION**

(45) Date of publication of patent specification: **04.05.83**

(51) Int. Cl.³: **B 65 D 1/40, B 62 J 11/00**

(21) Application number: **81301365.3**

(22) Date of filing: **30.03.81**

(54) **Bottle and use thereof on cycle.**

(30) Priority: **31.03.80 JP 43862/80 U**

(43) Date of publication of application:
**07.10.81 Bulletin 81/40**

(45) Publication of the grant of the patent:
**04.05.83 Bulletin 83/18**

(84) Designated Contracting States:
**BE DE FR GB IT**

(56) References cited:
**CH - A - 136 322**
**US - A - 2 002 635**
**US - A - 2 017 245**
**US - A - 2 790 669**
**US - A - 3 081 481**
**US - A - 3 171 559**
**US - A - 4 009 810**

(73) Proprietor: **SHIMANO INDUSTRIAL COMPANY LIMITED**
**77, 3-cho Oimatsu-cho Sakai-shi**
**Osaka (JP)**

(72) Inventor: **Shimano, Keizo**
**81, 3-cho, Midorigaoka-Minamimachi Sakai-Shi**
**Osaka (JP)**

(74) Representative: **Szczuka, Jan Tymoteusz et al,**
**Cruikshank & Fairweather 19 Royal Exchange Square**
**Glasgow G1 3AE Scotland (GB)**

Courier Press, Leamington Spa, England.

Bottle and use thereof on cycle

This invention relates to a drinking liquid bottle for a cycle, for mounting on an upwardly extending frame member of the cycle which frame member has a predetermined width and a trailing side which is arcuate in horizontal cross-section with a predetermined radius of curvature said water bottle comprising a body having an outlet and a stopper for opening and closing said outlet and side walls interconnected by end walls.

Conventional sports-type cycles used for cycling or road racing are often provided with fixing means for supporting a water bottle on the cycle frame member, usually on a down tube, so that a cyclist can drink water therefrom whilst riding the cycle without interruption of the running of the cycle. The bottle comprises a body having an outlet and a cap therefore. The body of a conventional bottle is usually cylindrical and considerably larger in an outer diameter than the down tube carrying the water bottle. Such a water bottle therefore gives rise to eddy currents in the airflow immediately behind the bottle during running of the cycle thereby increasing the air resistance to which the cycle is subjected. The increased air resistance tends to limit the high speed running efficiency which is particularly important to users of sports cycles and results in greater rider fatigue.

It is an object of the present invention to avoid or minimise the above problems.

The present invention provides a drinking liquid bottle for a cycle, for mounting on an upwardly extending frame member of the cycle which frame member has a predetermined width and a trailing side which is arcuate in horizontal cross-section with a predetermined radius of curvature, said water bottle comprising a body having an outlet, and a stopper for opening and closing said outlet, and side walls interconnected by end walls characterized in that said bottle has a generally flattened shape with the side walls being spaced apart by a substantially smaller separation than that between the leading and trailing end walls of the body, the separation between said side walls reducing progressively towards said trailing end wall and said trailing end wall being arcuate in horizontal cross-section with a radius of curvature smaller than said predetermined radius of curvature of said frame member trailing side, so that in use of said bottle, said body together with said frame member on which it is mounted and any fixing means provided on said frame member and disposed in use of said water bottle between said body and frame member for use in supporting said bottle on said frame member which fixing member means has its external side surfaces generally contiguous with the external side surfaces of said frame member, exhibit a generally streamlined external surface.

The body of the bottle of the invention may have various shapes in side elevation, for example, square, diamond or triangular-shape, as this aspect of the bottle shape generally has little or no effect on the overall air resistance.

With a bottle of the present invention, the external surface exhibited by the bottle, frame member and any fixing member means provided therebetween is generally streamlined so that an air flow is divided at the leading side of the frame member to pass along both sides of the frame member and the bottle body and then smoothly leaves the trailing end wall of the bottle body without generating any appreciably eddy currents. Thus when a bottle of the invention is mounted on the cycle frame, the air resistance to the cycle's running is increased at most by a relatively small amount.

The flattened body shape of the bottle also has the further advantage of making the bottle easier to grip by a cyclist wishing to drink from the bottle than a conventional bottle of similar capacity. In addition if the bottle is made of a suitable material such as a resiliently deformable plastics material then drinking therefrom by compressing the bottle between the rider's fingers so as to expel liquid therefrom into the rider's mouth by means of a pumping action is considerably facilitated.

Conveniently the bottle of the invention is preferably adapted for mounting in known manner by using cage means and other fixing members on the cycle frame as will be further described hereinbelow.

Further preferred features and advantages of the present invention will appear from the following description given by way of example of some preferred embodiments illustrated with reference to the accompanying drawings, in which:

Figure 1 is a schematic general side view of a cycle provided with a first water bottle of the invention;

Figure 2 is a partially cutaway detail side view corresponding to Figure 1;

Figure 3 is a horizontal sectional view taken on the line III—III in Figure 2;

Figure 4 is a corresponding view of a second embodiment;

Figure 5 is a detail side view corresponding generally to Figure 2 of the second embodiment;

Figure 6 is a partially sectioned side view corresponding to Figure 5; and

Figure 7 is an enlarged horizontal sectional view taken on the line VII—VII in Figure 6.

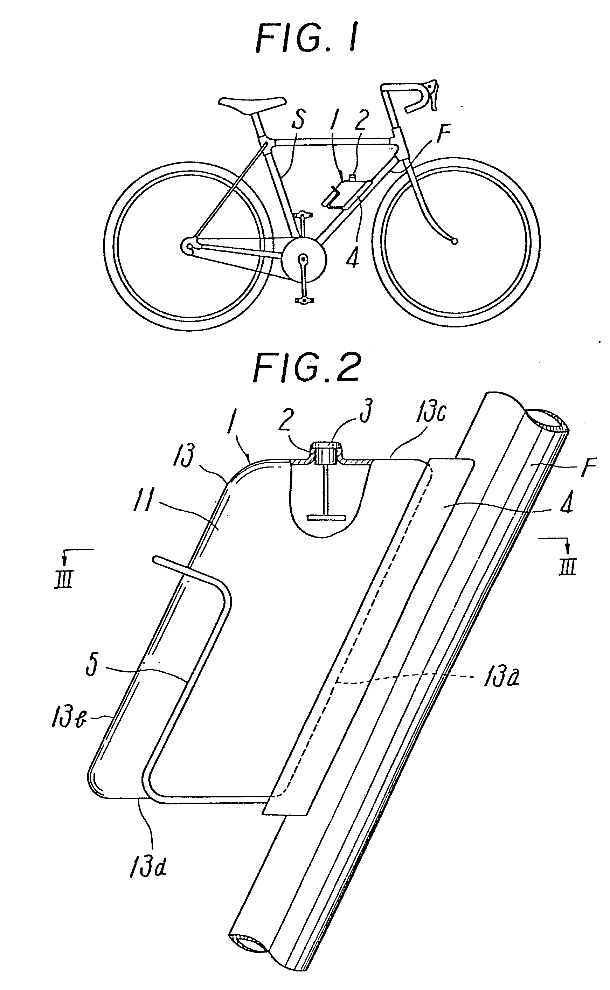

Figure 1 shows a water bottle of the invention mounted on a down tube frame member *F* of the cycle frame and comprising a body 1 having an outlet 2 and a stopper 3 for closing the outlet 2 as shown in Figure 2.

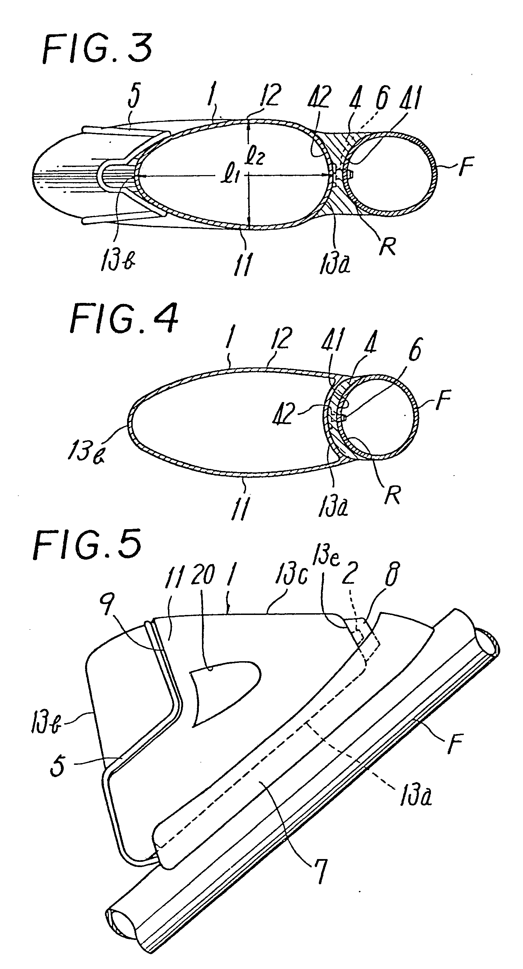

The down tube $F$ is generally in the form of an elliptical cross-section pipe with a convex arcuate trailing side surface $R$. The water bottle is mounted on the down tube $F$ with the aid of fixing means including a fixing member 4. The fixing member 4, as shown in Figures 2 and 3, has on one side a concave surface 41 substantially complementary to the convex trailing side surface $R$ of the down tube $F$ and on its other side a support surface 42 formed for mating with the leading end surface of the water bottle (to be described in further detail hereinbelow), and is secured to the down tube $F$ by a securing means, such as a screw 6. The fixing means also includes a support member 5 comprising a resiliently deformable spring wire formed into a cagelike structure secured to the fixing member 4. The cage is shaped so that the body 1 of the water bottle is removably held in the cage between the support surface 42 of the fixing member 4 and the support member 5, and retained in position therebetween by means of the spring force of the support member 5.

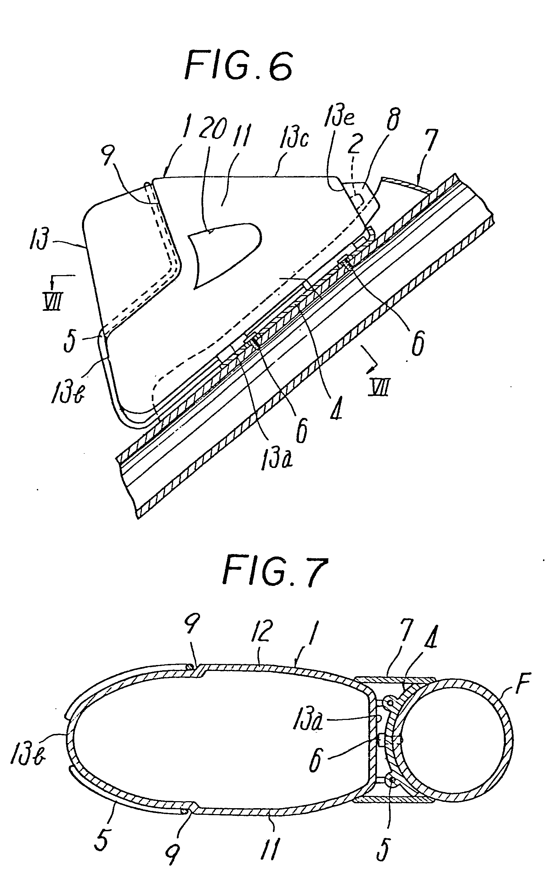

This form of bottle mounting is well-known; in the art and therefore will be readily understandable to those skilled in the art without the need for further detailed description. As an alternative there could be provided a frame member 7 formed integrally with the fixing member 4, or separately therefrom, as shown in Figures 6 and 7, and fixed together with the fixing member 4 to the down tube $F$. In this case, the frame member 7 may nestingly receive the leading end of the body 1 and the support member 5 hold the water bottle against said frame member 7, or the support member 5 may use a tightening band for the mounting. Advantageously when using a cage-like support member 5, a recess 9 of a depth slightly larger than the thickness of the support member 5, as shown in Figures 5 and 6, is provided in the side walls of the body (as described hereinbelow in further detail) so that the support member 5 does not project from the side wall (see Figure 7).

The body 1 of the water bottle of the invention comprises a pair of opposed side walls 11 and 12 extending longitudinally and vertically of the cycle when mounted on the cycle frame, and interconnecting end walls 13 contiguous with said side walls 11, 12. The connecting end walls 13 comprise a leading end wall 13a disposed alongside the down tube $F$ when the bottle is mounted thereon, a trailing end wall 13b, and upper and lower end walls 13c and 13d interconnecting the leading and trailing end walls 13a and 13b, so as to form, together with the side walls 11, 12 a relatively flat bottle.

Thus the body 1, as shown in Figure 3, has a length $l_1$ longitudinally of the cycle (in a horizontal plane, in use of the bottle mounted on the cycle) substantially larger than the width $l_2$ of the bottle laterally of the cycle between the side walls 11 and 12, the width $l_2$ being in turn approximately equal to or slightly larger than the outer diameter of the down tube $F$.

In addition, the body 1 shown in Figure 2 is generally diamond-shaped when viewed from the side, and the upper and lower end walls 13c and 13d extend generally horizontally when the bottle is mounted on the cycle and are connected to the trailing end wall 13b via respective arcuate wall portions so that the upper and rear lower corners of the bottle are rounded.

The width between the side walls 11 and 12 gradually reduces from the leading end wall 13a towards the trailing end wall 13b as shown in Figure 3, and the rear end wall 13b is formed so as to be convex and generally arcuate in horizontal cross-section with a smaller radius of curvature than the trailing side of the down tube $F$.

When the above described water bottle is mounted on the down tube $F$, the exposed surfaces of the combination define a substantially streamlined structure as may best be seen in Figure 3.

The body 1 is, as shown in Figure 3, generally egg-shaped in horizontal cross-section, but the modified body 1 shown in Figure 4 has a concave leading end wall 13a which is generally concentric with the trailing side surface $R$ of the down tube $F$.

Since, when the water bottle is mounted on the down tube $F$ it forms together with the latter a substantially streamlined shape, it hardly affects the overall air resistance of the cycle as the air flow around the down tube $F$ proceeds rearwardly along the outer surfaces of the fixing member 4 and side walls 11 and 12 and smoothly leaves them without generating eddy currents behind the body 1.

Naturally various different body shapes may be used without departing from the present invention. Thus the body 1 may be square or it may be generally triangular as shown in Figures 5 and 6 when viewed from the side. In the latter case the leading end wall 13a directly adjoins the trailing end wall 13b, the upper end wall 13c interconnecting the leading and trailing end walls 13a and 13b, so that when the body 1 is mounted on the down tube F the upper end wall 13c is substantially horizontal. At the junction between the leading end wall 13a and the upper end wall 13c, that is, at the leading apex of the triangle shape of the body 1, said body 1 is provided with a flat wall portion 13e having an outlet 2.

In the above described construction, it is preferable that the upper end wall 13c is made upwardly convex, or is connected to the trailing end wall 13b via an arcuate wall portion.

The body 1 of the third embodiment also forms, together with the down tube $F$ and fixing member 4, 7 a substantially streamlined external body surface as shown in Figure 7. The air flows along the side walls pass smoothly rearwardly of the bottle without generating any eddy currents, whereby the body 1 is considerably less affected by the air resistance than are conventional water bottles.

Conveniently the bottle is, as shown in Figures 5 and 6, provided with a cap 8 for a bottle-stopper (not shown) for opening or closing the outlet 2.

As an alternative the water bottle could of course be mounted on a seat tube $S$, instead of the down tube $F$.

As will be apparent from the above, the water bottle of the invention is so constructed that the body 1 is of a generally flattened shape being relatively thin between the side walls 11 and 12, the spacing between the latter being further reduced in a direction rearwardly of the leading end $13a$ towards the trailing end $13b$ and with the trailing end wall $13b$ being convex with a smaller radius of curvature than the trailing side of the cycle frame member on which it is to be mounted, usually the down tube of the cycle. In this way, air resistance against the body 1 can be restricted to a minimum, thereby avoiding any undue increase in air resistance to the running of the cycle arising from carrying of the bottle. As a result, the cyclist can ride the cycle at high speed in a stable condition with minimum effort and avoiding any undue fatigue.

The flattened-shape of the body 1 also makes the bottle easier to hold by the cyclist when he wishes to drink therefrom, whilst also facilitating a pumping action by squeezing of the body 1 to discharge water from the bottle into the cyclist's mouth. In addition the side walls 11 and 12 of the body 1 may also be provided with centrally disposed shallow recesses 20 which act as finger grip portions which enable the cyclist to hold the water bottle more securely.

## Claims

1. A drinking liquid bottle for a cycle, for mounting on an upwardly extending frame member $(F)$ of the cycle which frame member $(F)$ has a predetermined width and a trailing side $(R)$ which is arcuate in horizontal cross-section with a predetermined radius of curvature said water bottle comprising a body (1) having an outlet (2) and side walls (11, 12) interconnected by end walls (13) characterized in that said bottle has a generally flattened shape with the side walls (11, 12) being spaced apart by a substantially smaller separation $(l_2)$ than that $(l_1)$ between the leading and trailing end walls $(13a, 13b)$ of the body, the separation between said side walls (11, 12) reducing progressively towards said trailing end wall $(13b)$ and said trailing end wall $(13b)$ being arcuate in horizontal cross-section with a radius of curvature smaller than said predetermined radius of curvature of said frame member trailing side $(R)$, so that in use of said bottle, said body (1) together with said frame member $(F)$ on which it is mounted and any fixing member (4, 7) provided on said frame member $(F)$ and disposed in use of said bottle between said body (1) and frame member $(F)$ for use in supporting said bottle on said frame member $(F)$, which fixing member (4, 7) has its external side surfaces generally contiguous with the external side surfaces of said frame member $(F)$, exhibit a generally streamlined external surface.

2. A bottle according to Claim 1, wherein said end walls (13) also include upper and lower end walls ($13c$, $13d$) the junction between said upper and lower end walls ($13c$, $13d$) and said trailing end wall ($13b$) being generally arcuate and convex in vertical cross-section.

3. A bottle according to Claim 1 or Claim 2 wherein said body is generally egg-shaped in horizontal cross-section.

4. A bottle according to Claim 1 or Claim 2 wherein said leading end wall ($13a$) is generally complementary to the trailing side $(R)$ of said frame member $(F)$ with said predetermined radius of curvature, said trailing side $(R)$ being convex and said leading end wall ($13a$) concave.

5. A bottle according to any one of Claims 1 to 4 for mounting on an inclined frame member $(F)$ wherein upper and lower end walls ($13c$, $13d$) of said body (1) are formed so as to extend generally horizontally when said bottle is mounted on said frame member $(F)$ in use thereof, said body (1) being generally lozenge-shaped in its side elevation.

6. A bottle according to Claim 1 or either one of Claims 3 and 4 when dependent directly on Claim 1 wherein said end walls (13) of said body include an upper end wall ($13c$) interconnecting upper ends of said leading and trailing end walls ($13a$, $13b$), lower ends of said leading and trailing end walls ($13a$, $13b$) being directly interconnected, and said body having a generally triangular shape in its side elevation.

7. A bottle according to Claim 6, wherein said upper end wall ($13c$) is convex in longitudinal cross-section.

8. A bottle according to any one of Claims 1 to 7 wherein said side walls (11, 12) of said body (1) are provided with recess means (9) for engagement, in use of the bottle, with a cage means (5) provided on said frame member $(F)$.

9. A bottle according to any one of Claims 1 to 8 wherein said side walls (11, 12) of said body (1) are provided with recess means (20) formed to serve as finger grip means for use in holding the bottle by a rider.

10. A bottle according to Claim 1 or Claim 2 for use on a cycle having a fixing member (4) mounted on said frame member $(F)$ which fixing member (4) has a trailing side (42) with a predetermined cross-sectional shape, wherein the leading end wall ($13a$) of the bottle body (1) has a cross-sectional shape complementary to said predetermined cross-sectional shape.

11. A bottle according to any one of Claims 1 to 10 wherein the separation $(l_2)$ between the side walls (11, 12) is generally similar to or less than the width of the frame member (F) transversely of the cycle.

12. A bottle according to any one of the preceding claims when mounted on a said cycle which cycle is provided with a fixing means (7, 5) including a fixing member (7) disposed between the frame member (F) and the bottle body (1) with its external side surfaces generally contiguous with the external side surfaces (11, 12) of the body (1) and frame member (F) so as to exhibit a generally streamlined external surface.

13. A bottle according to any one of Claims 1 to 12 which is formed of a resiliently deformable plastics material.

**Revendications**

1. Bouteille de boisson pour cycle, destinée à être montée sur un élément de cadre (F) du cycle, dirigé vers le haut, cet élément de cadre (F) ayant une largeur prédéterminée et une face arrière (R) qui est arquée en section transversale horizontale, avec un rayon de courbure prédéterminé, cette bouteille d'eau comprenant un corps (1) qui comporte un orifice de sortie (2) et des parois latérales (11, 12) inter-connectées par des parois d'extrêmité (13), caractérisée en ce que cette bouteille a une forme globalement aplatie, les parois latérales (11, 12) étant espacées l'une de l'autre d'une distance ($l_2$) sensiblement plus petite que la distance ($l_1$) entre les parois d'extrêmité avant et arrière (13a, 13b) du corps, la distance entre les parois latérales (11, 12) diminuant progressivement vers la paroi d'extrêmité arrière (13b) et la paroi d'extrêmité arrière (13b) étant arquée en section transversale horizontale, avec un rayon de courbure plus petit que ledit rayon de courbure prédéterminé de la face arrière (R) de l'élément de cadre, de sorte qu'en position d'utilisation de la bouteille, l'ensemble du corps (1) de l'élément de cadre (F) sur lequel il est monté, et de toute pièce de fixation (4, 7) prévue sur l'élément de cadre (F) et située, lorsque la bouteille est utilisée, entre le corps (1) et l'élément de cadre (F) pour servir de support à la bouteille sur l'élément de cadre (F), cette pièce de fixation (4, 7) ayant ses surfaces latérales extérieures sensiblement contiguës aux surfaces latérales extérieures de l'élément de cadre (F), présente une surface extérieure sensiblement aérodynamique.

2. Bouteille suivant la revendication 1, caractérisée en ce que les parois d'extrêmité (13) comprennent également des parois d'extrêmité supérieure et inférieure (13c, 13d), la jonction entre ces parois d'extrêmité supérieure et inférieure (13c, 13d) et la paroi d'extrêmité arrière (13b) étant sensiblement arquée et convexe en section transversale verticale.

3. Bouteille suivant la revendication 1 ou la revendication 2, caractérisée en ce que le corps est sensiblement en forme d'oeuf, en section transversale horizontale.

4. Bouteille suivant la revendication 1 ou la revendication 2, caractérisée en ce que la paroi d'extrêmité avant (13a) est sensiblement complémentaire de la face arrière (R) de l'élément de cadre (F), présentant ledit rayon de courbure prédéterminé, cette face arrière (R) étant convexe et la paroi d'extrêmité avant (13a) concave.

5. Bouteile suivant l'une quelconque des revendications 1 à 4, destinée à être montée sur un élément de cadre incliné (F), caractérisée en ce que les parois d'extrêmité supérieure et inférieure (13c, 13d) du corps (1) sont formées de manière à être sensiblement horizontales lorsque la bouteille est montée sur l'élément de cadre (F) dans sa position d'utilisation, le corps (1) étant sensiblement en forme de losange en vue de côté.

6. Bouteille suivant la revendication 1 ou l'une des revendications 3 et 4 lorsqu'elles dépendent directement de la revendication 1, caractérisée en ce que les parois d'extrêmité (13) du corps comprennent une paroi d'extrêmité supérieure (13c) reliant les extrémités supérieures des parois d'extrêmité avant et arrière (13a, 13b), les extrémités inférieures desdites parois d'extrêmité avant et arrière (13a, 13b) étant directement interconnectées, et le corps ayant une forme sensiblement triangulaire en vue de côté.

7. Bouteille suivant la revendication 6, caractérisée en ce que la paroi d'extrêmité supérieure (13c) est convexe en section longitudinale.

8. Bouteille suivant l'une quelconque des revendications 1 à 7, caractérisée en ce que les parois latérales (11, 12) du corps (1) comportent des évidements (9) qui reçoivent, en position d'utilisation de la bouteille, des moyens en forme de cage (5) prévus sur l'élément de cadre (F).

9. Bouteille suivant l'une quelconque des revendications 1 à 8, caractérisée en ce que les parois latérales (11, 12) du corps (1) comportent des évidements (20) profilés pour servir de moyens de préhension pour les doigts, permettant le maintien de la bouteille par un cycliste.

10. Bouteille suivant la revendication 1 ou la revendication 2, destinée à être utilisée sur un cycle qui comporte une pièce de fixation (4) montée sur l'élément de cadre (F), laquelle pièce de fixation (4) a une face arrière (42) d'une forme prédéterminée en section transversale, caractérisée en ce que la paroi d'extrêmité avant (13a) du corps de bouteille (1) présente en section transversale une forme complémentaire de ladite forme prédéterminée.

11. Bouteille suivant l'une quelconque des revendications 1 à 10, caractérisée en ce que la distance ($l_2$) entre les parois latérales (11, 12) est sensiblement égale ou inférieure à la largeur de l'élément de cadre (F) dans la direction transversale du cycle.

12. Bouteille suivant l'une quelconque des revendications précédentes, qui se monte sur un cycle comportant des moyens de fixation (7, 5), caractérisée en ce que ces moyens de fixation comprennent une pièce de fixation (7), disposée entre l'élément de cadre (F) et le corps de bouteille (1), dont les surfaces latérales extérieures sont sensiblement contiguës aux surfaces latérales extérieures (11, 12) du corps (1) et de l'élément de cadre (F), de façon à présenter une surface extérieure sensiblement aérodynamique.

13. Bouteille suivant l'une quelconque des revendications 1 à 12, caractérisée en ce qu'elle est réalisée en une matière plastique élastiquement déformable.

## Patentansprüche

1. Getränkeflashce für ein Fahrrad, zum Anbringen auf einem sich nach oben erstreckenden Rahmenglied (F) des Fahrrads, welches Rahmenglied (F) eine vorgegebene Breite und eine Hinterseite (R) aufweist, die in horizontalem Querschnitt bogenförmig mit einem vorgegebenen Krümmungsradius ist, wobie diese Wasserflasche aus einem Körper (1) mit einem Auslass (2) und durch Stirnwände (13) miteinander verbundenen Seitenwänden (11, 12) besteht, dadurch gekennzeichnet, dass diese Flasche eine allgemein abgeflachte Gestalt aufweist, wobei die Seitenwände (11, 12) in einem Abstand ($l_2$) voneinander liegen, der erheblich kleiner ist als der Abstand ($l_1$) zwischen den vorderen und hinteren Stirnwänden (13a, 13b) des Körpers, wobei sich der Abstand zwischen diesen Seitenwänden (11, 12) zu dieser hinteren Stirnwand (13b) hin fortschreitend verringert und diese hintere Stirnwand (13b) in horizontalem Querschnitt bogenförmig mit einem kleineren Krümmungsradius als dem vorgegebenen Krümmungsradius der Hinterseite (R) dieses Rahmenglieds ist, so dass beim Gebrauch dieser Flasche dieser Körper (1) zusammen mit diesem Rahmenglied (F), auf dem er angebracht ist, und irgendeinem auf diesem Rahmenglied (F) und beim Gebrauch dieser Flasche zwischen diesem Körper (1) und Rahmenglied (F) zur Unterstützung dieser Flasche auf diesem Rahmenglied (F) angeordneten Befestigungsglied (4, 7), dessen äussere Seitenflächen allgemein mit dem äusseren Seitenflächen dieses Rahmenglieds (F) in Berührung stehen, eine allgemein stromlinienförmige Aussenfläche aufweisen.

2. Flasche nach Anspruch 1, worin diese Stirnwände (13) ferner obere und untere Stirnwände (13c, 13d) einschliessen, wobei die Verbindungsstelle zwischen diesen oberen und unteren Stirnwänden (13c, 13d) und dieser hinteren Stirnwand (13b) allgemein in senkrechtem Querschnitt bogenförmig und konvex ist.

3. Flasche nach Anspruch 1 oder 2, worin dieser Körper in horizontalem Querschnitt allgemein eiförmig ist.

4. Flasche nach Anspruch 1 oder 2, worin diese vordere Stirnwand (13a) allgemein mit der Hinterseite (R) dieses Rahmenglieds (F) mit jenem vorgegebenen Krümmungsradius komplementär ist, wobei diese Hinterseite (R) konvex und diese vordere Stirnwand (13a) konkav ist.

5. Flasche nach einem der Ansprüche 1 bis 4 zum Anbringen aus einem geneigten Rahmenglied (F), worin obere und untere Stirnwände (13c, 13d) dieses Körpers (1) so ausgebildet sind, dass sie sich allgemein horizontal erstrecken, wenn diese flasche bei ihrem Gebrauch auf diesem Rahmenglied (F) angebracht ist, wobei dieser Körper (1) in Seitenansicht allgemein rautenförmig ist.

6. Flasche nach Anspruch 1 oder einem der Ansprüche 3 und 4, wenn diese sich direkt auf Anspruch 1 rückbeziehen, worin diese Stirnwände (13) dieses Körpers eine obere Stirnwand (13c) einschliessen, welche die oberen Enden dieser vorderen und hinteren Stirnwände (13a, 13b) miteinander verbindet, wobei die Unterenden dieser vorderen und hinteren Stirnwände (13a, 13b) direkt miteinander verbunden sind und jener Körper in Seitenansicht eine allgemein dreieckige Gestalt aufweist.

7. Flasche nach Anspruch 6, worin diese obere Stirnwand (13c) im Längsschnitt konvex ist.

8. Flasche nach einem der Ansprüche 1 bis 7, worin diese Seitenwände (11, 12) diese Körpers (1) mit Ausnehmungen (9) zum Eingriff mit auf jenem Rahmenglied (F) vorgesehenen Einfassungsmitteln (5) beim Gebrauch der Flasche versehen sind.

9. Flasche nach einem der Ansprüche 1 bis 8, worin diese Seitenwände (11, 12) diese Körpers (1) mit Ausnehmungen (20) versehen sind, die so ausgebildet sind, dass sie beim Gebrauch einem Fahrer als Fingergriff zum Halten der Flasche dienen.

10. Flasche nach Anspruch 1 oder 2 zur Verwendung auf einem Fahrrad mit einem auf jenem Rahmenglied (F) angebrachten Befestigungsglied (4), welches eine Hinterseite (42) mit vorgegebener Querschnittsform aufweist, worin die vordere Stirnwand (13a) des Flaschenkörpers (1) eine Querschnittsform aufweist, die jener vorgegebenen Querschnittsform komplementär ist.

11. Flasche nach einem der Ansprüche 1 bis 10, worin der Abstand ($l_2$) zwischen den Seitenwänden (11, 12) allgemein ähnlich oder kleiner ist als die Breite des Rahmenglieds (F) quer zum Fahrrad.

12. Flasche nach einem der vorhergehenden Ansprüche, angebracht auf einem solchen Fahrrad, welches mit Befestigungsmitteln (7, 5) versehen ist, die ein Befestigungsglied (7) einschliessen, das zwischen dem Rahmenglied (F) und dem Flaschenkörper (1) mit dessen äusseren Seitenflächen allgemein in Berührung mit den äusseren Seitenflächen (11, 12) des Körpers (1) und Rahmenglieds (F) so angeordnet ist, dass sich eine allgemein stromlinienförmige Aussenfläche ergibt.

13. Flasche nach einem der Ansprüche 1 bis 12, die aus einem elastisch verformbaren Kunststoffmaterial gebildet ist.

# FIG. 1

# FIG.2

FIG. 3

FIG. 4

FIG. 5

# FIG.6

# FIG.7